# FASCICULE DE BREVET EUROPEEN

(11) **EP 4 632 524 B1**
(45) Date de publication et mention de la délivrance du brevet: **21.10.2026**
(21) Numéro de dépôt: 25168726.5
(22) Date de dépôt: 07.04.2025
(51) Int. Cl.: G05D 23/19, G05D 23/24, H05B 1/02

(54) **DISPOSITIF DESTINÉ À ÊTRE CONNECTÉ À UN RÉGULATEUR DE CHAUFFAGE DE BÂTIMENT**
VORRICHTUNG ZUR VERBINDUNG MIT EINEM GEBÄUDEHEIZREGLER
DEVICE FOR CONNECTING TO A BUILDING HEATING REGULATOR

(30) Priorité: 09.04.2024 CH 3672024
(43) Date de publication de la demande: 15.10.2025
(73) Titulaire: Oblo Solutions SA, 1950 Sion (CH)
(72) Inventeur: Aymon, Xavier, 1966 Ayent (CH); Catteeuw, Jérôme, 1971 Champlan (CH)
(74) Mandataire: P&TS SA (AG, Ltd.)

(56) Documents cités:
- US-A- 3 246 839
- US-A- 4 199 102
- US-A1- 2015 248 118

## Description

### Domaine technique

La présente invention concerne le domaine de la régulation des chauffages, notamment un dispositif destiné à compléter ou à remplacer une sonde extérieure pour régulateur de chauffage.

### Etat de la technique

Dans un monde où la conservation de l'énergie et la réduction des émissions de gaz à effet de serre sont des préoccupations majeures, l'efficacité énergétique des systèmes de chauffage revêt une importance croissante. La régulation des systèmes de régulation de chauffage jouent un rôle crucial dans cet objectif.

Les régulateurs de chauffage classiques déterminent les besoins en chaleur à fournir en chaque instant à partir de la différence entre une température de consigne fournie par l'utilisateur et la température intérieure dans les pièces à chauffer. Cette température intérieure est par exemple déterminée à l'aide de capteurs dans les différentes pièces, ou de manière indirecte en mesurant la température de l'eau qui retourne dans la chaudière après avoir traversé les radiateurs et l'ensemble du circuit de chauffe.

Cette régulation à l'aide de la température intérieure a l'avantage de réagir lentement aux variations de température à l'extérieur. Par exemple, si la température à l'extérieur baisse en soirée, il faut attendre que cette baisse de température se répercute dans la pièce pour que la régulation ne réagisse et commande un chauffage plus important. A ce moment, les murs du bâtiment se sont déjà refroidit et il faut produire une chaleur importante pour le chauffer à nouveau. Ce mode de régulation basé uniquement sur la mesure de la température dans les pièces est donc peu efficace énergétiquement, et entraîne des variations de température intempestives dans les pièces.

Afin de résoudre ce manque de réactivité des régulations basées uniquement sur la mesure de la température interne, de nombreux des fabricants de régulateurs proposent aussi une régulation basée sur la température à l'extérieur du bâtiment. A cet effet, on utilise une ou plusieurs sondes de température extérieure, ce qui permet au régulateur de chauffage de tenir compte des variations de la température hors du bâtiment avant même qu'elle ne se répercutent sur la température à l'intérieur. La régulation en fonction de la température extérieure actuelle permet ainsi de réduire la consommation d'énergie tout en améliorant le confort des occupants.

Au cœur de la sonde de température extérieure se trouve un capteur de température qui convertit la température en une grandeur électrique. Les types de capteurs les plus couramment utilisés sont les thermistances, c'est-à-dire des composants dont l'impédance varie avec la température. Les thermistances sont généralement fabriquées à partir de matériaux semiconducteurs dont la résistance électrique varie de manière significative avec la température. Ces capteurs offrent une sensibilité élevée et une réponse rapide aux changements de température.

Les sondes de température sont généralement associées à un circuit de mesure, le plus souvent hors de la sonde et dans le régulateur, qui fournit un courant électrique constant à travers l'élément sensible et mesure la tension aux bornes de la thermistance. En utilisant la loi d'Ohm (V = IR), où V est la tension, I est le courant et R est la résistance, le circuit de mesure peut déterminer la résistance de la thermistance, qui est directement liée à la température ambiante. Les données de résistance mesurées par le circuit de mesure sont ensuite traitées électroniquement dans le régulateur pour convertir la variation de résistance en une valeur de température qui est utilisée pour ajuster la production de chaleur.

La régulation en fonction de la température externe actuelle qui est généralement utilisée permet certes de tenir compte des variations de température dès qu'elle se produisent à l'extérieur du bâtiment, et avant même que celles-ci ne se répercutent sur la température dans les pièces. Afin d'anticiper encore davantage les besoins futurs en chaleur, on connait par ailleurs des régulateurs prédictifs qui tiennent compte des prévisions météorologiques. Ces régulateurs prédictifs permettent par exemple d'éviter le risque de chauffer un bâtiment inutilement juste avant que le soleil ne frappe le bâtiment, rendant ce chauffage inutile ou même indésirable. A l'inverse, ils permettent aussi d'anticiper une baisse prévue de température et de fournir la chaleur nécessaire suffisamment à l'avance pour éviter que le bâtiment ne se refroidisse. Des exemples de tels régulateurs prédictifs sont décrits dans EP2013674 et dans EP2154437.

Les régulateurs de chauffage prédictifs restent cependant peu répandus, en particulier dans les anciennes installations. Il n'est pas toujours aisé d'équiper une installation de chauffage existante avec un tel régulateur prédictif ; le plus souvent, il est nécessaire de remplacer tout le régulateur, voire toute la chaudière si le fabricant de chaudière ne propose pas de régulateur prédictif compatible.

EP2154437A1 décrit un bloc auxiliaire relié d'une part à une centrale météorologique et d'autre part à un dispositif de régulation du chauffage de bâtiments, afin de fournir à ce dispositif de régulation des valeurs de correction en fonction de prévisions météorologiques notamment. Ce bloc auxiliaire fournit un signal de correction afin de décaler la courbe de chauffe du régulateur. Il peut uniquement être connecté à des régulateurs de chauffage munis d'une interface permettant d'agir sur la courbe de chauffe, et ne peut pas être utilisé avec des régulateurs ordinaires dépourvus d'une telle interface.

EP1715254A1 décrit une vanne à trois voie motorisée qui peut s'ouvrir ou se fermer en fonctions de données météorologiques. Cette vanne agit en aval de la chaudière, en contrôlant le débit d'eau dans un circuit de chauffage. De nombreux bâtiments comportent cependant plusieurs circuits de chauffage distincts, qui doivent tous être équipés d'une telle vanne. Par ailleurs, cette vanne agit uniquement sur le circuit de chauffage, mais pas sur la chaudière qui reste chaude même lorsque les prévisions météorologiques indiquent qu'il ne faudrait plus chauffer.

EP3084547 B1 décrit un dispositif permettant de modifier la résistance de la sonde de température afin de contrôler la puissance fournie par la chaudière. Cette modification ne dépend pas des prévisions météorologiques.

US 3246839 A décrit une sonde de température comprenant plusieurs ponts de Wheatsone dont une résistance est soumise à l'action de la température, du vent, du soleil etc. Le dispositif ne permet pas d'anticiper les variations de température, et n'est pas destiné à compléter une installation existante.

US 4199102 A décrit un régulateur de chauffage pour contrôler une vanne. Le dispositif comporte une sonde externe ainsi qu'un réseau d'iimpédance contrôlées. Ce dispositif n'est pas non plus destiné à compléter une installation existante, et ne permet pas d'anticiper les variations de température.

US 2015248118 A1 décrit un dispositif comprenant une sonde de températeure extérieure et un module de connexion à un serveur météo afin de recevoir des prévisions météorologiques. Toutefois, le dispositif n'est pas non plus destiné à être disposé entre une sonde de température externe et une régulation de chauffage.

### Bref résumé de l'invention

Un but de la présente invention est de proposer un dispositif pour la régulation prédictive de chauffage qui puisse être installé aisément sur pratiquement n'importe quelle installation de chauffage muni d'une régulation basée sur la mesure de température extérieure, sans qu'il soit nécessaire de remplacer le régulateur.

Il existe un très grand nombre de régulateurs de chauffage existants qui permettent de réguler la quantité de chaleur produite en fonction de la température existante mesurée par une sonde à l'extérieur du bâtiment. Ces régulateurs fonctionnent à satisfaction mais il est souhaitable d'améliorer leur efficacité, grâce à une régulation prédictive, sans pour autant remplacer le régulateur existant. Un but de la présente invention est donc de proposer un dispositif pour la régulation prédictive de chauffage qui puisse être installé sur une installation existante, sans devoir remplacer le régulateur de chauffage existant, et de préférence sans devoir remplacer la sonde de température externe.

De manière générale, un but de la présente invention est de proposer un dispositif qui soit exempt des limitations des dispositifs connus, ou du moins qui offre un meilleur compromis entre les différentes limitations de ces dispositifs.

Selon l'invention, ces buts sont atteints notamment au moyen d'un dispositif destiné à être connecté à un régulateur de chauffage de bâtiment afin de lui fournir une grandeur électrique, comprenant :
- un module de connexion à un serveur météorologique ;

une première et une deuxième borne de connexion au régulateur de chauffage de bâtiment;
une troisième et une quatrième borne de connexion à une thermistance destinée à mesurer la température à l'extérieur du bâtiment ;
une quatrième borne de connexion à la thermistance;
un réseau d'impédances entre la première borne de connexion et la deuxième borne de connexion ;
une pluralité de commutateurs permettant de modifier sélectivement la manière dont lesdites impédances sont connectées dans ledit réseau, de manière à varier l'impédance entre la première borne et la deuxième borne ;
un circuit de contrôle lié au module de connexion et agencé pour contrôler lesdits commutateurs de manière à ce que l'impédance entre la première borne et la deuxième borne dépende à la fois de l'impédance de la thermistance et de prévisions météorologiques obtenues depuis ledit serveur météorologique.

Le dispositif est destiné à être connecté à un régulateur de chauffage, via les premières et deuxièmes bornes de connexion, à la place de la thermistance prévue habituellement. Il fournit ainsi une grandeur électrique, par exemple une valeur d'impédance, qui est interprétée par le régulateur de chauffage comme représentative de la température extérieure instantanée, mais qui dépend aussi des prévisions météorologiques.

Le dispositif peut être destiné à être connecté entre un régulateur de chauffage et une sonde de température externe.

Les sondes de température externe conventionnelles doivent être adaptées au régulateur de chauffage ; selon la marque et même le modèle de régulateur, on devra choisir une sonde de température différente, caractérisée notamment par un coefficient entre la résistance de la sonde et la température externe différent. Par exemple, certaines sondes de température ont une résistance de 1KΩ à 25°C et d'autres ont une résistance de 10KΩ à la même température. Afin de permettre une adaptation aisée à différents régulateurs, au moins certaines des impédances du réseau sont amovibles et peuvent être remplacées aisément par des impédances de valeurs différentes afin d'adapter de dispositif à différents types de régulateurs.

Alternativement, ou en addition, au moins une des impédances du réseau peut être une impédance variable, par exemple un potentiomètre, afin d'adapter l'impédance du réseau d'impédances en fonction du régulateur, et/ou en fonction de l'installation.

L'impédance du réseau d'impédances peut aussi être ajustée par le circuit de contrôle, par exemple par logiciel, afin de l'adapter au type de régulateur. La plage de variation possible par le circuit de contrôle est cependant généralement plus limitée que celle qui est possible en remplaçant une ou plusieurs impédances.

Dans un mode de réalisation préférentiel, l'impédance du réseau d'impédances peut être adaptée au régulateur grâce à un ajustement grossier mais de grande amplitude, en remplaçant une ou plusieurs impédances du réseau, et de manière fine, de plus faible amplitude, grâce à un logiciel exécuté par le circuit de contrôle et/ou grâce à un potentiomètre.

Le circuit de contrôle commande les commutateurs de manière à varier l'impédance entre les premières et deuxièmes bornes de connexion en tenant compte des prévisions météorologiques. Par exemple, le circuit de contrôle modifie la valeur de l'impédance lorsque les prévisions météorologiques annoncent un réchauffement ou une augmentation de l'ensoleillement imminent, afin d'éviter de chauffer le bâtiment avec le chauffage juste avant que celui-ci ne soit chauffé par l'environnement. A l'inverse, le circuit de contrôle modifie la valeur de l'impédance en direction opposée lorsque les prévisions météorologiques annoncent une baisse de température imminente, afin d'anticiper les besoins de chauffage.

Le dispositif de l'invention permet d'ajuster la valeur d'impédance entre les premières et deuxièmes bornes de manière à permettre une commande du chauffage qui tienne notamment compte des prévisions météorologiques, même avec un régulateur qui ne reçoit pas lui-même de données météorologiques. La valeur instantanée de l'impédance entre les premières et deuxièmes bornes indique ainsi la chaleur qui doit être apportée en chaque instant pour garantir les besoins futurs qui peuvent être anticipés selon les prévisions météorologiques.

La troisième et quatrième borne permettent de connecter une thermistance, par exemple la sonde de température externe (thermistance) prévue habituellement pour être connectée directement au régulateur. Cette thermistance varie selon la température ambiante autour de la sonde, afin d'ajuster l'impédance entre les premières et deuxièmes bornes en tenant également compte de cette température ambiante.

Le circuit de contrôle peut par exemple comporter un automate programmable, capable de se connecter au serveur météorologique via le module de connexion, et programmé pour commander les commutateurs en fonction au moins de ces prévisions météorologiques.

Le circuit de contrôle peut comporter un microcontrôleur, un dispositif Arduino, un ordinateur industriel, etc.

Le circuit de contrôle peut générer un code, par exemple un code à 3, 4, 5 ou 6 chiffres, représentatif des besoins de chaleur instantanés. Un multiplexeur peut être prévu pour convertir ce code en signaux de commande pour un nombre supérieur de commutateurs. Cela permet de commander un nombre de commutateurs importants à partir d'un nombre limité de bornes de sortie du circuit de contrôle.

Le circuit de contrôle peut être agencé pour contrôler lesdits commutateurs de manière à ce que l'impédance entre la première borne et la deuxième borne dépende de l'heure du jour. Par exemple, la valeur d'impédance peut être commandée de manière à anticiper les variations quotidiennes en besoin de chaleur.

Le circuit de contrôle peut être agencé pour contrôler lesdits commutateurs de manière à ce que l'impédance entre la première borne et la deuxième borne dépende du jour de l'année et/ou des heures d'ensoleillement. Par exemple, la valeur d'impédance peut être commandée de manière à anticiper les variations saisonnières en besoin de chaleur et/ou les variations d'heures d'ensoleillement selon la saison.

Le circuit de contrôle peut être agencé pour contrôler lesdits commutateurs de manière à ce que l'impédance entre la première borne et la deuxième borne dépende de l'illumination prévue, par exemple l'iiradiation prévue en watts/m².

Le circuit de contrôle peut être relié à un circuit de contrôle de panneaux photovoltaïques, de manière à ce que l'impédance entre la première borne et la deuxième borne dépende de la production instantanée de courant électrique par lesdits panneaux. Par exemple, l'impédance peut être commandée de manière à enclencher un chauffage, notamment un chauffage électrique ou une pompe à chaleur, de préférence lorsque la production d'électricité par les panneaux photovoltaïques dépasse la consommation instantanée du bâtiment, ou dépasse un seuil.

Le réseau d'impédances peut par exemple comporter plusieurs impédances reliées en série. Les commutateurs peuvent être agencés de manière à court-circuiter sélectivement certaines de ces impédances, de manière à réduire l'impédance totale du réseau.

D'autres configurations de réseaux peuvent être prévues.

Les impédances peuvent être des résistances.

La thermistance peut être comprise dans le réseau d'impédances. Par exemple, la thermistance peut être montée en série avec lesdites impédances. La thermistance peut aussi être montée en parallèle avec une ou plusieurs impédances du réseau.

Dans un mode de réalisation préférentiel, la thermistance est de préférence connectée au circuit de contrôle. Le circuit de contrôle détermine alors la valeur instantanée de cette thermistance et contrôle les réseau d'impédance en tenant compte à la fois de cette valeur instantanée et des prévisions météorologiques, et éventuellement d'autres paramètres.

Le circuit de contrôle peut être de préférence paramétré en fonction de l'inertie thermique du bâtiment et de la puissance de l'installation de chauffage. En effet, une anticipation importante est avantageuse dans le cas d'un bâtiment ayant une grande inertie thermique, et/ou difficile à chauffer rapidement en raison d'un système de chauffage de relativement faible puissance. Une anticipation moins importante est suffisante dans le cas d'un bâtiment ayant une plus petite inertie thermique, et/ou qui peut être chauffé rapidement en raison d'un système de chauffage de relativement forte puissance.

Le dispositif comporte de préférence un boîtier. Le réseau d'impédances, la pluralité de commutateurs et le circuit de contrôle sont de préférence montés dans ledit boîtier. Les bornes permettent de connecter le dispositif à un régulateur de chauffage et à une thermistance hors du boîtier.

Le boîtier peut être destiné à être monté hors du régulateur de chauffage. Le boîtier est distinct du boîtier du régulateur de chauffage. Il peut être destiné à être monté dans le local de chauffage. Il peut aussi, dans une variante, être destiné à être monté hors de ce local, par exemple près de la sonde, à l'extérieur du bâtiment. Dans ce cas, le boîtier peut être étanche pour pouvoir être monté à l'extérieur d'un bâtiment.

Le boîtier peut comporter une alimentation électrique. Cette alimentation est de préférence indépendante du régulateur de chauffage. L'alimentation peut comprendre des batteries, ou une alimentation connectée au réseau.

Le boîtier peut être en bioplastique.

Le thermistor peut être à l'intérieur ou à l'extérieur du boîtier.

L'invention a aussi pour objet un procédé pour améliorer l'efficacité de la régulation du chauffage d'un bâtiment, comprenant les étapes suivantes :
interrompre la connexion électrique entre un thermistor à l'extérieur d'un bâtiment et un régulateur de chauffage à l'intérieur d'un bâtiment;
connecter électriquement un dispositif tel que décrit ou revendiqué entre ledit thermistor et ledit régulateur de chauffage ;
mesurer la température à l'extérieur du bâtiment à l'aide du thermistor ;
contrôler l'impédance entre la première et la deuxième borne de connexion en fonction de la résistance du thermistor et de prévisions météorologiques obtenues depuis le serveur météorologique ;
réguler le chauffage par le régulateur en fonction d'une température de consigne et de ladite impédance entre la première et la deuxième borne de connexion.

Ce procédé permet donc de faire un retro-fitting d'installations de régulations de chauffage existantes, sans remplacer le régulateur et sans remplacer le thermistor.

Le dispositif selon l'invention n'échange de préférence aucune donnée digitale ni aucun message avec le régulateur de chauffage ; il se contente de contrôler une impédance entre deux bornes connectées au régulateur. Le dispositif est ainsi compatible avec un grand nombre de régulateurs de chauffage, sans requérir d'entrée de données spécifiques.

Vu du régulateur, le dispositif se comporte comme une simple impédance variable dont la valeur permet de déterminer une consigne de chauffage.

La liaison entre le régulateur de chauffage et le dispositif comporte de préférence uniquement deux fils électriques.

L'invention a aussi pour objet une installation de régulation de chauffage de bâtiment comprenant :
un régulateur de chauffage à pour réguler chaleur produite afin de chauffer le bâtiment;
un thermistor à l'extérieur du bâtiment;
un dispositif tel que décrit ou revendiqué, connecté électriquement d'une part au régulateur et d'autre part au thermistor.

### Brève description des figures

Des exemples de mise en œuvre de l'invention sont indiqués dans la description illustrée par les figures annexées dans lesquelles :
- La figure 1 illustre un schéma bloc d'un système de chauffage incluant un dispositif selon un mode de réalisation de l'invention ;
- La figure 2 illustre un schéma bloc simplifié d'un dispositif selon un mode de réalisation de l'invention.

### Exemple(s) de mode de réalisation de l'invention

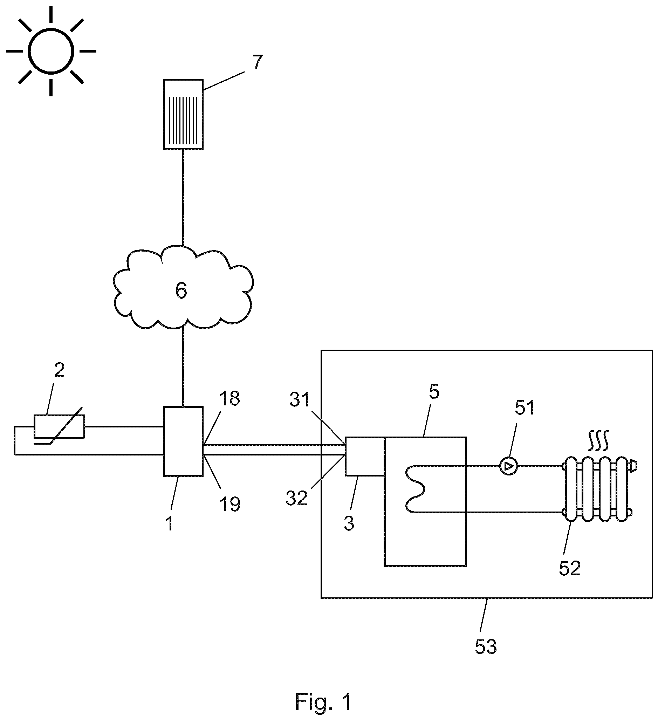

La figure 1 illustre un schéma bloc d'un système de chauffage incluant un dispositif 1 selon un mode de réalisation de l'invention. La figure illustre un bâtiment 53 avec une chaudière 5 pour chauffer de l'eau dans un circuit de chauffage comprenant un ou plusieurs radiateurs 52, une ou plusieurs vannes 51, des systèmes de chauffage au sol, etc. La chaudière peut être une chaudière à mazout, à gaz, à pellets, une pompe à chaleur, un chauffage à distance, ou n'importe quel type de chauffage.

La température dans les différentes pièces peut être réglée d'une part au moyen des vannes 51, par exemple des vannes à trois voie des vannes thermostatiques sur les radiateurs 52 qui régulent le débit d'eau chaude dans le radiateur en fonction de la température ambiante ; et d'autre part à l'aide d'un régulateur de chauffage conventionnel 3 qui détermine la chaleur à fournir au circuit de chauffage en chaque instant, en fonction d'une température de consigne indiquée par l'utilisateur, d'une impédance sur les bornes de connexion 31, 32, et d'une courbe de chauffage indiquant le besoin de chauffage en fonction de la température de consigne et de cette valeur d'impédance. La température à l'entrée et au retour du circuit de chauffage, et/ou des sondes de température intérieure, peuvent aussi être utilisées par le régulateur. La courbe de chauffage peut être ajustable.

Les bornes de connexion 31, 32 sont conventionnellement destinées à y installer une sonde de température externe, montée à l'extérieur du bâtiment 53 et dont l'impédance, par exemple la résistance, dépend de la température à l'extérieur du bâtiment. Dans l'art antérieur, la sonde de température montée sur les bornes de connexion 31, 32 est généralement une thermistance, c'est-à-dire un composant dont la valeur d'impédance décroit lorsque la température augmente. Le régulateur 3 détermine la valeur de cette impédance, par exemple en y appliquant une tension de valeur connue et en déterminant le courant résultant entre les bornes de connexion 31, 32. La différence entre la température correspondant à cette valeur d'impédance et la température de consigne indiquée par l'utilisateur est exploitée pour déterminer le besoin actuel en chaleur.

Sur la figure 1, un dispositif 1 selon l'invention est monté à la place de la sonde de température extérieure sur les bornes de connexion 31, 32 du régulateur. Ce dispositif 1 est équipé d'une thermistance 1, ou connecté à une telle thermistance, afin de fournir en tout temps une grandeur électrique qui dépende de la température externe actuelle. Le dispositif 1 est aussi en liaison de données avec un serveur météorologique 7 afin de pouvoir anticiper les futurs besoins de chaleur.

Le serveur météorologique 7 peut être par exemple un serveur Internet qui fournit des données telles que la température prévue, l'irradiation, les heures d'ensoleillement, et/ou le vent. Les données fournies sont localisées, c'est-à-dire qu'elles dépendent de l'emplacement du dispositif 1.

Le serveur 7 peut aussi être constitué par une console météorologique domestique, par exemple une console installée par l'exploitant du système de chauffage, et qui fournit des données telles que la pression barométrique et/ou l'ensoleillement local (par exemple les éphémérides), utiles afin de prévoir des variations de température. La console météorologique domestique peut aussi être connectée à un serveur météorologique à distance afin d'obtenir des prévisions de température et/ou d'ensoleillement, et de transmettre ces paramètres au dispositif 1. La console météorologique domestique peut être installée à l'intérieur du bâtiment 53.

Le dispositif 1 est avantageusement connectée au régulateur 3 par une liaison bifilaire, trifilaire ou quadrifilaire.

Il existe aussi dans l'état de la technique des sondes assurant une liaison sans fil, par exemple une liaison WiFi, ZigBee etc, avec le régulateur. Ces liaisons sans fil présentent cependant l'inconvénient d'exploiter en général des modes de communication propriétaires et dépendant de la marque de régulateur; par conséquent, une liaison bifilaire sera généralement préférée sauf lorsqu'une liaison sans fil peut être établie aisément. Dans ce cas, la valeur d'impédance est mesurée dans le dispositif 1 et convertie en grandeur analogique ou numérique via un signal sans fil au régulateur 3.

Le dispositif 1 est avantageusement connectée au serveur météorologique 7 via un réseau 6 de type Internet. D'autres types de réseaux de données sans fil, par exemple un réseau cellulaire, LoRa, etc, peuvent être mis en œuvre. Le dispositif 1 peut aussi se connecter à Internet via le réseau WiFi domestique du bâtiment 53.

Le dispositif 1 est destiné à être monté à l'intérieur ou à l'extérieur du bâtiment 53, par exemple sur le chemin électrique entre le régulateur de chauffage et la sonde de température extérieure à l'extérieur du bâtiment.

Le dispositif 1 est avantageusement muni d'un boîtier et muni de moyens de fixation contre un mur. La thermistance 2 peut être à l'intérieur ou de préférence à l'extérieur de ce boitier.

Le dispositif peut ainsi aisément être ajouté à une installation de chauffage existante, sans modifier le régulateur de chauffage ni la sonde de température externe, le dispositif venant s'intercaler entre ces deux composants.

Il est aussi possible de retirer la sonde de température externe d'une installation de chauffage existante, et de la remplacer par un dispositif 1 selon n'importe quel mode de réalisation de l'invention, pour obtenir les avantages recherchés, c'est-à-dire une régulation du chauffage qui anticipe les variations futures en besoin de chauffage.

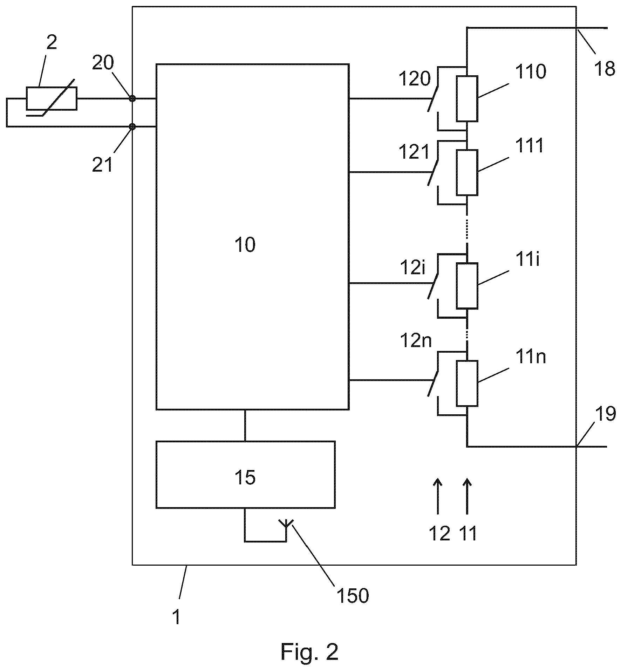

Un exemple de dispositif 1 selon un mode de réalisation de l'invention est illustrée sur la figure 2. Le dispositif 1 comporte deux bornes de connexion 18, 19 destinées à être connectées aux bornes 31, 32 du régulateur via une liaison bifilaire. Les bornes 18, 19 peuvent aussi être connectées à l'entrée d'un dispositif de transmission sans fil non illustré, pour communiquer la grandeur électrique représentative du besoin de chaleur demandé via une liaison sans fil.

Deux autres bornes de connexion 20, 21 permettent de monter une thermistance 2 afin de mesurer la température actuelle près du dispositif 1. La thermistance 2 peut être à l'extérieur du boitier du dispositif1, comme sur la figure 2, ou à l'intérieur de ce boitier. Dans ce cas, les bornes de connexion 20, 21 peuvent être des bornes permettant une connexion amovible, des soudures, ou n'importe quel élément permettant de connecter la thermistance 2 de manière permanente ou amovible.

Un réseau 11 d'impédances 110, 111, .., 11i, ..., 11n est connecté à l'intérieur du boîtier du dispositif 1 entre les bornes de connexion 18, 19. Dans ce mode de réalisation décrit, le réseau d'impédances est constitué de n impédances en série. Les impédances ont de préférence des valeurs différentes, par exemple des multiples de puissances de 2, par exemple 1kΩ, 2kΩ, 4kΩ, etc. D'autres types de réseau d'impédances peuvent être prévus, y compris des impédances en parallèle, etc.

Une pluralité 12 de commutateurs 120, 121, ..., 12i, ..., 12n sont connectés au réseau d'impédances 11 afin d'ajuster sélectivement l'impédance totale du réseau entre les bornes de connexion 18, 19. Dans le mode de réalisation préférentiel illustré, chaque commutateur 12i permet de court-circuiter une des impédances 11i, de manière à réduire l'impédance totale du réseau lorsque le commutateur est fermé.

Il est possible de prévoir une ou plusieurs impédances non court-circuitables, correspondant à l'impédance minimale du réseau d'impédances lorsque tous les commutateurs 12i sont fermés.

L'ensemble des composants électroniques du dispositif sont avantageusement alimentés par le réseau électrique via une alimentation, ou par une batterie, un accumulateur, un circuit photovoltaïque, etc.

Le circuit de contrôle 10 peut être monté sur une première carte de circuit imprimé.

Au moins une des impédances 11i est de préférence amovible, afin de pouvoir la remplacer par une impédance de valeur différente selon le type de sonde de température prévu par le régulateur 3. Il est aussi possible de prévoir au moins une impédance variable, par exemple un potentiomètre, afin d'ajuster la plage de variation d'impédance en fonction de la température externe.

Dans un mode de réalisation, les impédances sont toutes montées sur un deuxième circuit imprimé, par exemple comme résistances SMD, lié de manière amovible au premier circuit imprimé, et en tout cas au circuit de contrôle 10. Il est alors possible de remplacer la totalité du réseau d'impédances par un autre réseau avec des impédances différentes, afin de simuler des thermistances différentes.

Les commutateurs 12i sont contrôlés par le circuit de contrôle 10 qui détermine leur état d'ouverture ou de fermeture en chaque instant.

Le circuit de contrôle 10 peut comprendre par exemple un automate programmable, un PC industriel, un microcontrôleur, un FPGA, un Arduino, ou un autre composant programmable. Le circuit de contrôle 10 exécute un logiciel non décrit afin de déterminer les besoins en chaleur en chaque instant en fonction de la température externe instantanée, telle que déterminée par la thermistance 2, et des prévisions météorologiques reçues du serveur météorologique 7 via le module de connexion sans fil 15.

D'autres paramètres peuvent être pris en considération par le circuit de contrôle 10 afin de déterminer le besoins de chaleur en chaque instant, et donc de contrôler les commutateurs 12i en fonction de ces besoins de chaleur. Par exemple, le circuit de contrôle 10 peut tenir compte de l'heure courante afin d'anticiper l'augmentation de température externe diurne, et la chute de température nocturne. Le circuit de contrôle 10 peut aussi tenir compte du jour de l'année, afin de prendre en compte la variation d'ensoleillement au cours des saisons. A cet effet, le circuit de contrôle 10 peut être muni d'un module d'horloge et/ou récupérer l'heure et la date courante depuis un serveur 7 à distance.

Le circuit de contrôle 10 peut aussi tenir compte des variations de prix ou de disponibilité de l'énergie au cours de la journée. A cet effet, une interface avec un système de contrôle de panneaux photovoltaïques du bâtiment peut être prévue. Cela permet par exemple de chauffer de préférence lorsque la production d'électricité par ces panneaux dépasse un seuil, ou dépasse le niveau de consommation. Cette solution est notamment avantageuse dans le cas d'une installation de chauffage 5 électrique et/ou à pompe à chaleur notamment.

Le module de connexion 15 peut être muni d'une antenne 150 pour communiquer via un réseau de données sans fil, par exemple un réseau WiFi GSM, LoRa etc.

La température simulée *tₛᵢₘ* par le circuit de contrôle 10 peut par exemple obéir à l'équation suivante : 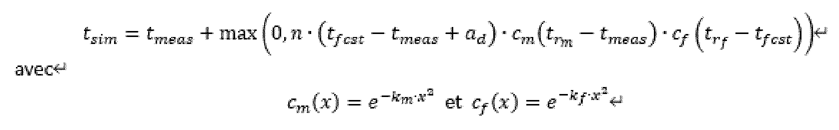 **dans laquelle :**
*tₛᵢₘ*: température simulée pour la chaudière/PAC
*tₘₑₐₛ*: température extérieure mesurée
*t_{fcst}*: moyenne des températures prévues dans la plage [*h*_{*f_cst*_*min*}: *h_{fcst_max}*]
n: facteur d'amplification de la correction totale
*a_{d}*: offset de correction de la différence de température
*cₘ*: coefficient de correction selon la température mesurée
*t_{rₘ}:* température de référence pour la correction de la température mesurée
*kₘ*: coefficient k de la fonction exponentielle de la température mesurée
*c_{f}*: coefficient de correction selon la température prévue
*t_{r_{f}}*: température de référence pour la correction de la température prévue
*k_{f}*: coefficient k de la fonction exponentielle de la température prévue.

L'irradiation solaire prévue peut aussi être prise en compte.

Les paramètres *a_{d}, cₘ, tᵣₘ, kₘ, c_{f}, t_{rf}* et *k_{f}* peuvent être fixés dans le logiciel. Au moins certains d'entre eux sont avantageusement paramétrables et être adaptés à l'installation en cours, notamment selon l'inertie du bâtiment, la puissance du chauffage, et/ou les préférences de l'exploitant, etc.

A cet effet, le module de connexion 15 permet avantageusement de modifier au moins certains de ces paramètres au moyen d'un terminal à distance, par exemple via une page web, une app sur smartphone etc.

La fonction max(0,...) est optionnelle; elle permet de ne jamais appliquer une correction négative, donc d'éviter de chauffer plus qu'avant correction. Dans ce cas, on réglera avantageusement la courbe de chauffe du régulateur avec une température de consigne relativement élevée, que l'on compensera en simulant une température extérieure relativement basse.

Le module de contrôle peut de préférence être paramétré en fonction du bâtiment, de manière à adapter la régulation en fonction de l'inertie du bâtiment et/ou de la puissance du chauffage 54 disponible.

## Revendications

1. Dispositif (1) destiné à être connecté à un régulateur (3) de chauffage de bâtiment afin de lui fournir une grandeur électrique, comprenant :
- un module de connexion (15) à un serveur météorologique (7) ;
- une première borne de connexion (18) au régulateur (3) de chauffage de bâtiment;
- une troisième borne de connexion (20) à une thermistance (2) destinée à mesurer la température à l'extérieur du bâtiment (53) ;
**caractérisé en ce qu'**il comprend
- une deuxième borne de connexion (19) au régulateur (3) de chauffage de bâtiment;
- une quatrième borne de connexion (21) à la thermistance (2);
- un réseau (11) d'impédances (110-11n) entre la première borne de connexion et la deuxième borne de connexion ;
- une pluralité de commutateurs (120-12n) permettant de modifier sélectivement la manière dont lesdites impédances sont connectées dans ledit réseau (11), de manière à varier l'impédance entre la première borne et la deuxième borne ;
- un circuit de contrôle (10) lié au module de connexion et agencé pour contrôler lesdits commutateurs de manière à ce que l'impédance entre la première borne et la deuxième borne dépende à la fois de l'impédance de la thermistance (2) et de prévisions météorologiques obtenues depuis ledit serveur météorologique (7).

2. Dispositif selon la revendication 1, comprenant un boîtier, le réseau d'impédances, la pluralité de commutateurs et le circuit de contrôle étant montés dans ledit boîtier, lesdites bornes permettant de connecter le dispositif au régulateur de chauffage hors du boîtier et à la thermistance hors du boîtier.

3. Dispositif selon l'une des revendications 1 ou 2, dans lequel le circuit de contrôle comporte un automate programmable et/ou un microcontrôleur.

4. Dispositif selon la revendication 3, dans lequel le circuit de contrôle comporte en outre un multiplexeur connecté audit automate programmable et/ou au microcontrôleur pour contrôler lesdits commutateurs.

5. Dispositif selon l'une des revendications 1 à 4, dans lequel ledit circuit de contrôle (10) est agencé pour contrôler lesdits commutateurs de manière à ce que l'impédance entre la première borne de connexion (18) et la deuxième borne de connexion (19) dépende également du jour de l'année et/ou des heures d'ensoleillement.

6. Dispositif selon l'une des revendications 1 à 5, dans lequel ledit circuit de contrôle (10) est relié à un circuit de contrôle de panneaux photovoltaïques, de manière à ce que l'impédance entre la première borne de connexion (18) et la deuxième borne de connexion (19) dépende également de la production instantanée de courant électrique par lesdits panneaux.

7. Dispositif selon l'une des revendications 1 à 6, ledit réseau d'impédances (11) comportant plusieurs impédances (11i) reliées en série, lesdits commutateurs (12) permettant de court-circuiter sélectivement certaines de ces impédances.

8. Dispositif selon l'une des revendications 1 à 7, ladite thermistance étant connectée au circuit de contrôle.

9. Dispositif selon l'une des revendications 1 à 8, au moins une desdites impédances étant ajustable.

10. Dispositif selon la revendication 9, le circuit de contrôle étant monté sur un premier circuit imprimé, lesdites impédances étant montées sur un deuxième circuit imprimé liée de manière amovible au premier circuit imprimé.

11. Dispositif selon l'une des revendications 1 à 10, comportant des moyens pour paramétrer le circuit de contrôle en fonction de l'inertie du bâtiment.

12. Dispositif selon l'une des revendications 1 à 11, dans laquelle le circuit de contrôle (10) est agencé de manière à simuler une température toujours égale ou plus basse que la température extérieure mesurée.

13. Procédé pour améliorer l'efficacité de la régulation du chauffage d'un bâtiment, comprenant les étapes suivantes :
interrompre la connexion électrique entre un thermistor à l'extérieur d'un bâtiment et un régulateur de chauffage à l'intérieur d'un bâtiment;
connecter électriquement un dispositif selon l'une des revendications 1 à 12 entre ledit thermistor et ledit régulateur de chauffage ;
mesurer la température à l'extérieur du bâtiment à l'aide du thermistor;
contrôler l'impédance entre la première et la deuxième borne de connexion en fonction de la résistance du thermistor et de prévisions météorologiques obtenues depuis le serveur météorologique ;
réguler le chauffage par le régulateur en fonction d'une température de consigne et de ladite impédance entre la première et la deuxième borne de connexion.

14. Installation de régulation de chauffage de bâtiment comprenant :
un régulateur de chauffage à pour réguler chaleur produite afin de chauffer le bâtiment;
un thermistor à l'extérieur du bâtiment;
un dispositif selon l'une des revendications 2 à 12 connecté électriquement d'une part au régulateur et d'autre part au thermistor.

## Patentansprüche

1. Vorrichtung (1), die dazu bestimmt ist, mit einem Gebäudeheizungsregler (3) verbunden zu sein, um diesem eine elektrische Größe bereitzustellen, umfassend:
- ein Verbindungsmodul (15) zu einem Wetterserver (7);
- einen ersten Verbindungsanschluss (18) zu dem Gebäudeheizungsregler (3);
- einen dritten Verbindungsanschluss (20) zu einem Thermistor (2), der dazu bestimmt ist, die Temperatur außerhalb des Gebäudes (53) zu messen;
**dadurch gekennzeichnet, dass** sie Folgendes umfasst:
- einen zweiten Verbindungsanschluss (19) zu dem Gebäudeheizungsregler (3);
- einen vierten Verbindungsanschluss (21) zu dem Thermistor (2);
- ein Netzwerk (11) von Impedanzen (110-11n) zwischen dem ersten Verbindungsanschluss und dem zweiten Verbindungsanschluss;
- eine Vielzahl von Schaltern (120-12n), die das selektive Ändern der Art und Weise, wie die Impedanzen in dem Netzwerk (11) verbunden sind, ermöglichen, um die Impedanz zwischen dem ersten Anschluss und dem zweiten Anschluss zu variieren;
- eine Steuerschaltung (10), die mit dem Verbindungsmodul verbunden ist und dazu eingerichtet ist, die Schalter so zu steuern, dass die Impedanz zwischen dem ersten Anschluss und dem zweiten Anschluss sowohl von der Impedanz des Thermistors (2) als auch von Wettervorhersagen, die von dem Wetterserver (7) erhalten werden, abhängt.

2. Vorrichtung nach Anspruch 1, die ein Gehäuse umfasst, wobei das Netzwerk von Impedanzen, die Vielzahl von Schaltern und die Steuerschaltung in dem Gehäuse montiert sind, wobei die Anschlüsse das Verbinden der Vorrichtung mit dem Heizungsregler außerhalb des Gehäuses und mit dem Thermistor außerhalb des Gehäuses ermöglichen.

3. Vorrichtung nach einem der Ansprüche 1 oder 2, wobei die Steuerschaltung eine speicherprogrammierbare Steuerung und/oder einen Mikrocontroller beinhaltet.

4. Vorrichtung nach Anspruch 3, wobei die Steuerschaltung ferner einen Multiplexer beinhaltet, der mit der speicherprogrammierbaren Steuerung und/oder dem Mikrocontroller verbunden ist, um die Schalter zu steuern.

5. Vorrichtung nach einem der Ansprüche 1 bis 4, wobei die Steuerschaltung (10) dazu eingerichtet ist, die Schalter so zu steuern, dass die Impedanz zwischen dem ersten Verbindungsanschluss (18) und dem zweiten Verbindungsanschluss (19) auch von dem Tag des Jahres und/oder den Sonnenstunden abhängt.

6. Vorrichtung nach einem der Ansprüche 1 bis 5, wobei die Steuerschaltung (10) mit einer Steuerschaltung für Photovoltaikmodule verbunden ist, sodass die Impedanz zwischen dem ersten Verbindungsanschluss (18) und dem zweiten Verbindungsanschluss (19) auch von der momentanen Erzeugung von elektrischem Strom durch die Module abhängt.

7. Vorrichtung nach einem der Ansprüche 1 bis 6, wobei das Netzwerk von Impedanzen (11) mehrere in Reihe geschaltete Impedanzen (11i) beinhaltet, wobei die Schalter (12) das selektive Kurzschließen gewisser dieser Impedanzen ermöglichen.

8. Vorrichtung nach einem der Ansprüche 1 bis 7, wobei der Thermistor mit der Steuerschaltung verbunden ist.

9. Vorrichtung nach einem der Ansprüche 1 bis 8, wobei mindestens eine der Impedanzen einstellbar ist.

10. Vorrichtung nach Anspruch 9, wobei die Steuerschaltung auf einer ersten Platine montiert ist, wobei die Impedanzen auf einer zweiten Platine montiert sind, die mit der ersten Platine lösbar verbunden ist.

11. Vorrichtung nach einem der Ansprüche 1 bis 10, die Mittel zum Parametrieren der Steuerschaltung in Abhängigkeit von der Trägheit des Gebäudes beinhaltet.

12. Vorrichtung nach einem der Ansprüche 1 bis 11, wobei die Steuerschaltung (10) zum Simulieren einer Temperatur eingerichtet ist, die immer gleich oder niedriger als die gemessene Außentemperatur ist.

13. Verfahren zum Verbessern der Effizienz der Regelung der Heizung eines Gebäudes, das die folgenden Schritte umfasst:
Unterbrechen der elektrischen Verbindung zwischen einem Thermistor außerhalb eines Gebäudes und einem Heizungsregler innerhalb eines Gebäudes;
elektrisches Verbinden einer Vorrichtung nach einem der Ansprüche 1 bis 12 zwischen dem Thermistor und dem Heizungsregler;
Messen der Temperatur außerhalb des Gebäudes mit Hilfe des Thermistors;
Steuern der Impedanz zwischen dem ersten und dem zweiten Verbindungsanschluss in Abhängigkeit von dem Widerstand des Thermistors und von Wettervorhersagen, die von dem Wetterserver erhalten werden;
Regeln der Heizung durch den Regler in Abhängigkeit von einer Solltemperatur und der Impedanz zwischen dem ersten und dem zweiten Verbindungsanschluss.

14. Gebäudeheizungsregelungsanlage, die Folgendes umfasst:
einen Heizungsregler zum Regeln der zum Heizen des Gebäudes erzeugten Wärme;
einen Thermistor außerhalb des Gebäudes;
eine Vorrichtung nach einem der Ansprüche 2 bis 12, die einerseits mit dem Regler und andererseits mit dem Thermistor elektrisch verbunden ist.

## Claims

1. Device (1) intended to be connected to a building heating regulator (3) to provide an electrical quantity thereto, comprising:
- a connection module (15) for connecting to a meteorological server (7);
- a first connection terminal (18) for connecting to the building heating regulator (3);
- a third connection terminal (20) for connecting to a thermistor (2) intended to measure the temperature outside the building (53);
**characterized in that** it comprises
- a second connection terminal (19) for connecting to the building heating regulator (3);
- a fourth connection terminal (21) for connecting to the thermistor (2);
- a network (11) of impedances (110-11n) between the first connection terminal and the second connection terminal;
- a plurality of switches (120-12n) for selectively modifying the manner in which said impedances are connected in said network (11) so as to vary the impedance between the first terminal and the second terminal;
- a control circuit (10) connected to the connection module and designed to control said switches in such a manner that the impedance between the first terminal and the second terminal depends both on the impedance of the thermistor (2) and on meteorological forecasts obtained from said meteorological server (7).

2. Device according to Claim 1, comprising a housing, the impedance network, the plurality of switches and the control circuit being mounted in said housing, said terminals enabling the device to be connected to the heating regulator outside the housing and to the thermistor outside the housing.

3. Device according to either of Claims 1 and 2, wherein the control circuit comprises a programmable logic controller and/or a microcontroller.

4. Device according to Claim 3, wherein the control circuit further comprises a multiplexer connected to said programmable logic controller and/or to the microcontroller for controlling said switches.

5. Device according to one of Claims 1 to 4, wherein said control circuit (10) is designed to control said switches such that the impedance between the first connection terminal (18) and the second connection terminal (19) also depends on the day of the year and/or the hours of sunshine.

6. Device according to one of Claims 1 to 5, wherein said control circuit (10) is connected to a photovoltaic panel control circuit such that the impedance between the first connection terminal (18) and the second connection terminal (19) also depends on the instantaneous production of electric current by said panels.

7. Device according to one of Claims 1 to 6, said impedance network (11) comprising a plurality of impedances (11i) connected in series, said switches (12) enabling some of these impedances to be selectively short-circuited.

8. Device according to one of Claims 1 to 7, said thermistor being connected to the control circuit.

9. Device according to one of Claims 1 to 8, at least one of said impedances being adjustable.

10. Device according to Claim 9, the control circuit being mounted on a first printed circuit board, said impedances being mounted on a second printed circuit board removably connected to the first printed circuit board.

11. Device according to one of Claims 1 to 10, comprising means for parameterizing the control circuit on the basis of the inertia of the building.

12. Device according to one of Claims 1 to 11, wherein the control circuit (10) is designed to simulate a temperature that is always equal to or lower than the measured outside temperature.

13. Method for improving the efficiency of the regulation of the heating of a building, comprising the following steps:
interrupting the electrical connection between a thermistor on the outside of a building and a heating regulator on the inside of a building;
electrically connecting a device according to one of Claims 1 to 12 between said thermistor and said heating regulator;
measuring the temperature outside the building using the thermistor;
controlling the impedance between the first and second connection terminals on the basis of the resistance of the thermistor and meteorological forecasts obtained from the meteorological server;
regulating the heating by means of the regulator on the basis of a setpoint temperature and of said impedance between the first and second connection terminals.

14. Building heating regulation system comprising:
a heating regulator for regulating heat produced in order to heat the building;
a thermistor on the outside of the building;
a device according to one of Claims 2 to 12 electrically connected, on the one hand, to the regulator and, on the other hand, to the thermistor.
